# EUROPÄISCHE PATENTSCHRIFT

(11) **EP 2 427 275 B1**
(45) Veröffentlichungstag und Bekanntmachung des Hinweises auf die Patenterteilung: **23.03.2016**
(21) Anmeldenummer: 10716481.6
(22) Anmeldetag: 20.04.2010
(51) Int. Cl.: G01L 19/00, B05B 7/12, B05B 12/00

(54) **SPRITZPISTOLE MIT ABNEHMBARER DRUCKMESSEINRICHTUNG**
SPRAY GUN HAVING A REMOVABLE PRESSURE GAUGE
PISTOLET A PULVERISATION COMPRENANT UN DISPOSITIF DE MESURE DE LA PRESSION AMOVIBLE

(30) Priorität: 07.05.2009 DE 102009020194
(43) Veröffentlichungstag der Anmeldung: 14.03.2012
(73) Patentinhaber: SATA GmbH & Co. KG, 70806 Kornwestheim (DE)
(72) Erfinder: BROSE, Jens, 74354 Ottmarsheim (DE); TSCHAN, Alexander, 70806 Kornwestheim (DE)
(86) Internationale Anmeldenummer: PCT/EP2010/002392
(87) Internationale Veröffentlichungsnummer: WO 2010/127766

(56) Entgegenhaltungen:
- EP-A1- 1 247 586
- EP-A2- 0 567 325
- EP-B1- 1 294 490
- WO-A1-91/16610
- WO-A1-2007/128127
- DE-A1- 3 906 219
- DE-C1- 19 807 973
- GB-A- 2 411 235
- US-A- 6 010 082
- US-A1- 2005 252 994

## Beschreibung

Die Erfindung betrifft eine Spritzpistole nach dem Oberbegriff des Anspruchs 1.

Eine solche Spritzpistole ist aus der US2005/0252994 bekannt. Eine weitere Spritzpistole ist aus der EP 1 294 490 B1 bekannt. Bei dieser Spritzpistole mit einem Pistolenkörper, einer am Pistolenkörper angeordneten Düsenanordnung, einem im Pistolenkörper angeordneten Druckluftzufuhrkanal mit einer Ventilanordnung zur Steuerung der Druckluftzufuhr zur Düsenanordnung und einer Einrichtung zur Regulierung der Druckluftzufuhr ist eine Druckmesseinrichtung zur Erfassung und Anzeige des Drucks im Druckluftzufuhrkanal in die Einrichtung zur Regulierung der Druckluftzufuhr integriert. Die Druckmesseinrichtung ist dabei in einem Gehäuse untergebracht, wobei das Gehäuse zweckmäßiger Weise als Drehknopf ausgebildet ist und auf diese Weise die Funktion eines Stellglieds ausübt, mit dem die der Düsenanordnung zugeführte Druckluft reguliert werden kann.

Nachteilig bei dieser Anordnung ist, dass zur Regulierung der Druckluftzufuhr die Druckmesseinrichtung, welche über eine Druckanzeigeeinrichtung verfügt, verdreht wird, wodurch auch die Druckanzeigeeinrichtung abhängig von der Stellung des Drehknopfs unterschiedliche Stellungen einnimmt und u.U. in bestimmten Stellungen auf dem Kopf steht. In solchen ungünstigen Stellungen kann der Benutzer die Druckanzeigeeinrichtung schwer ablesen. Bei der bekannten Anordnung wird bevorzugt eine als Digitalmanometer ausgebildete Druckmesseinrichtung mit einer Digitalanzeige verwendet. Hierbei erweist sich ein notwendiger Batteriewechsel als umständlich, denn hierfür muss zunächst die Einrichtung zur Regulierung der Druckluftzufuhr aus der Spritzpistole und dann die darin integrierte Druckmesseinrichtung ausgebaut werden. Darüber hinaus besteht bei der bekannten Anordnung die Gefahr einer unbeabsichtigten Verstellung des Drehknopfs, wodurch unbeabsichtigt die Druckluftzufuhr geändert wird. Außerdem kann bei der Reinigung der Spritzpistole das Digitalmanometer mit Reinigungsmittel in Kontakt gebracht und dann verschmutzt oder beschädigt werden.

Hiervon ausgehend liegt der Erfindung die Aufgabe zugrunde, eine gattungsgemäße Spritzpistole so weiter zu bilden, dass sie eine möglichst jederzeit einwandfrei funktionierende Druckmesseinrichtung aufweist.

Diese Aufgabe wird mit einer Spritzpistole mit den Merkmalen des Anspruchs 1 gelöst. Bevorzugte Ausführungsformen der erfindungsgemäßen Spritzpistole sind den Ansprüchen 2 bis 24 zu entnehmen.

Mit der erfindungsgemäßen Spritzpistole gemäß Anspruch 1 wird ermöglicht, dass die Druckmesseinrichtung bei Reinigungsarbeiten nicht verschmutzt oder beschädigt wird und ein bei Verwendung eines Digitalmanometers notwendiger Batteriewechsel einfach durchführbar ist.

Nachfolgend wird die Erfindung anhand von Ausführungsbeispielen unter Bezugnahme auf die begleitenden Zeichnungen näher erläutert. Die Zeichnungen zeigen:
- F**ig. 1:**: eine zum Teil geschnittene Seitenansicht einer erfindungsgemäßen Spritzpistole mit eingesetzter Einrichtung zur Regulierung der Druckluftzufuhr und daran befestigter Druckmesseinrichtung;
- **Fig. 2:**: perspektivische Ansicht einer erfindungsgemäßen Spritzpistole mit herausgezogener Einrichtung zur Regulierung der Druckluftzufuhr und daran befestigter Druckmesseinrichtung;
- **Fig. 3:**: perspektivische Ansicht der Spritzpistole von Figur 2 mit eingesetzter Einrichtung zur Regulierung der Druckluftzufuhr und einer davon abgenommenen Druckmesseinrichtung;
- **Fig. 4:**: Seitenansicht einer erfindungsgemäßen Einrichtung zur Regulierung der Druckluftzufuhr einer erfindungsgemäßen Spritzpistole mit daran befestigter Druckmesseinrichtung;
- **Fig. 5:**: perspektivische Ansicht der Einrichtung zur Regulierung der Druckluftzufuhr von Figur 4, mit einer davon abgenommenen Druckmesseinrichtung;
- **Fig. 6:**: Explosionsdarstellung der Einrichtung zur Regulierung der Druckluftzufuhr von Figur 4 mit daran befestigter Druckmesseinrichtung;
- **Fig. 7:**: Detailansicht der Einrichtung zur Regulierung der Druckluftzufuhr von Figur 4, im Querschnitt (Figur 7a) und Detailansicht der Einrichtung zur Regulierung der Druckluftzufuhr im Querschnitt mit daran befestigter Druckmesseinrichtung (Figur 7b),
- Fig. 8:: perspektivische Ansicht einer digitalen Druckmesseinrichtung
- Fig. 9: perspektivische Ansicht einer anderen digitalen Druckmesseinrichtung,
- Fig. 10: perspektivische Ansicht einer weiteren erfindungsgemäßen Spritzpistole mit eingesetzter Einrichtung zur Regulierung der Druckluftzufuhr,
- Fig. 11: die Spritzpistole nach Fig. 10 mit einer davon abgenommenen Druckmesseinrichtung,
- Fig. 12: perspektivische Ansicht einer Prüfluftkappe mit erfindungsgemäßen Druckmesseinrichtungen,
und
- Fig. 13: die Prüfluftkappe nach Fig. 12 mit einer davon abgenommenen Druckmesseinrichtung.

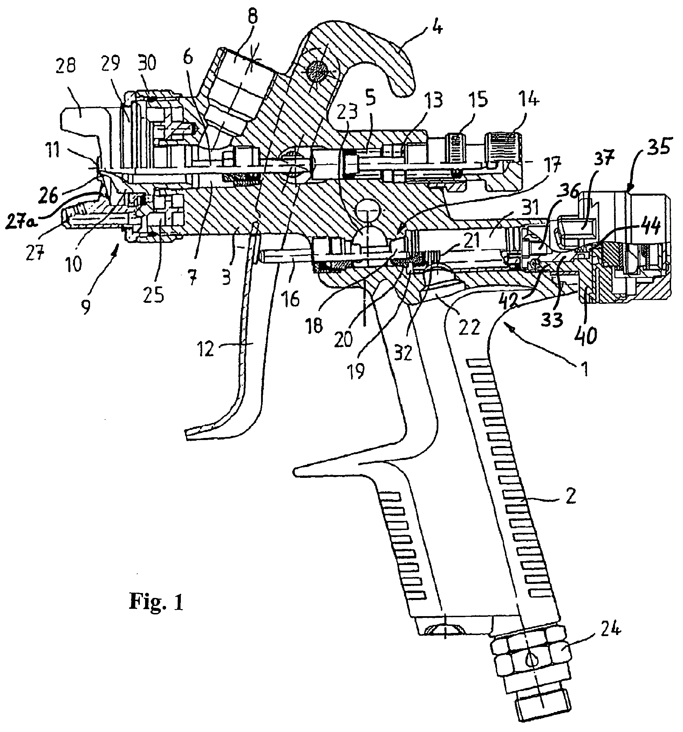

Die in den Fig. 1 bis 3 dargestellte Spritzpistole enthält einen Pistolenkörper 1 mit einem Handgriff 2 und einem Oberteil 3, an dem ein Aufhängehaken 4 angeformt ist. Durch das Oberteil 3 verläuft eine von vorne nach hinten durchgehende und mehrfach abgestufte Durchgangsbohrung 5, in der eine Düsennadel 6 axial verschiebbar geführt ist. Die Durchgangsbohrung 5 bildet in einem vorderen Bereich einen erweiterten Aufnahmeraum 7, in den eine schräge Zulaufbohrung 8 zum Aufsatz eines nicht dargestellten Farbaufnahmebehälters mündet. An dem vorderen Ende der Durchgangsbohrung 5 ist eine Düsenanordnung 9 montiert, die eine mittels eines Gewindes am Oberteil 3 des Pistolenkörpers 1 fixierbare Farbdüse 10 enthält. Die Farbdüse 10 weist an ihrem vorderen Ende eine Düsenbohrung 11 auf, die zusammen mit einem spitz zulaufenden vorderen Endteil der über einen Betätigungshebel 12 axial bewegbaren Düsennadel 6 einen regulierbaren Zulauf für die Farbe, den Lack oder dgl. bildet. Der Betätigungshebel 12 ist derart mit der Düsennadel 6 verbunden, dass diese beim Zurückziehen des Betätigungshebels 12 entgegen der Kraft einer Feder 13 nach hinten verschoben wird und die Düsenbohrung 11 zur Abgabe der Farbe öffnet. Über eine am hinteren Ende der Durchgangsbohrung 5 angeordnete Stellschraube 14 mit entsprechender Kontermutter 15 ist die Vorspannung der Druckfeder 13 und der Weg der Düsennadel beim Zurückziehen des Betätigungshebels einstellbar. Durch den Betätigungshebel 12 ist über eine Stange 16 außerdem eine Ventilanordnung 17 zur Steuerung der Druckluftzufuhr zur Düsenanordnung 9 betätigbar.

Die Ventilanordnung 17 enthält einen mit der Stange 16 verbundenen Schließkegel 18 und einen in einer Bohrung 19 im Pistolenkörper 1 vorgesehenen Ventilsitz 20, gegen den der Schließkegel 18 durch eine Feder 21 gedrückt wird. Beim Zurückziehen des Betätigungshebels 12 wird der Schließkegel 18 entgegen der Kraft der Feder 21 über die Stange 16 vom Ventilsitz 20 abgehoben, wobei eine Verbindung zwischen einem stromaufwärts der Ventilanordnung 17 gelegenen unteren Teil 22 und einem stromabwärts der Ventilanordnung 17 gelegenen oberen Teil 23 eines Druckluftzufuhrkanals für die Druckluftzufuhr zur Düsenanordnung 9 geöffnet wird. An der Unterseite des Handgriffs 2 ist ein mit dem unteren Teil 22 des Druckluftzufuhrkanals in Verbindung stehender Druckluftanschluss 24 für eine Druckluftleitung angeordnet.

Von dem oberen Teil 23 des Druckluftzufuhrkanals wird die Druckluft zu einem Luftleitsystem 25 und von dort zu einem Ringspalt 26 geleitet, der durch die Düsenbohrung 11 und den vorderen Enden der Farbdüse 10 gebildet wird. Die Druckluft erzeugt im Bereich der Düsenbohrung 11 ein Vakuum, durch das die Farbe aus der Farbdüsenbohrung gesaugt und mit der Druckluft unter Bildung eines Rundstrahls mitgerissen wird. Über sogenannte Hornluftbohrungen 27 in vorstehenden Hörnern 28 einer die Farbdüse 10 umgebenden Luftkappe 29 kann außerdem die Druckluft zur Formung des Rundstrahls in einen Flachstrahl austreten. Die Luftkappe 29 ist über eine Überwurfmutter 30 an dem Oberteil 3 des Gehäuses 1 befestigbar. Steuerbohrungen 27a in der Luftdüse dienen dabei zur Strahlausformung.

In der Bohrung 19 im Pistolenkörper 1 ist außerdem eine Einrichtung zur Regulierung der Druckluftzufuhr angeordnet. Diese Einrichtung enthält eine drehbare Hülse 31, die eine Querbohrung 32 im Bereich der Einmündung des unteren Teils 22 des Druckluftzufuhrkanals in die Bohrung 19 aufweist. Die Hülse 31 ist drehfest mit einem hinteren Aufnahmeteil 33 verbunden, das am hinteren Ende der Bohrung 19 verdrehbar angeordnet ist. Durch .Drehung des Aufnahmeteils 33 kann somit auch die Hülse 31 gedreht und damit der Luftdurchlass im Bereich der Querbohrung 32 reguliert werden.

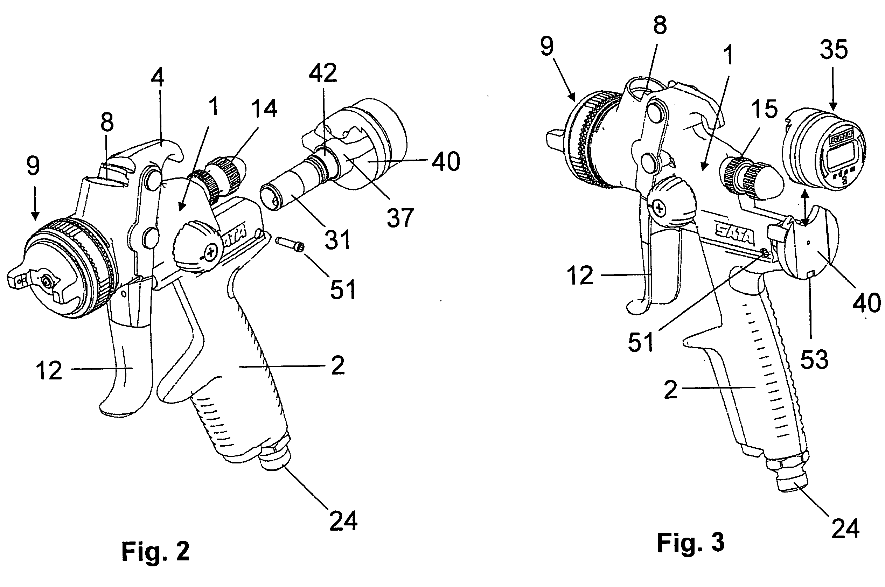

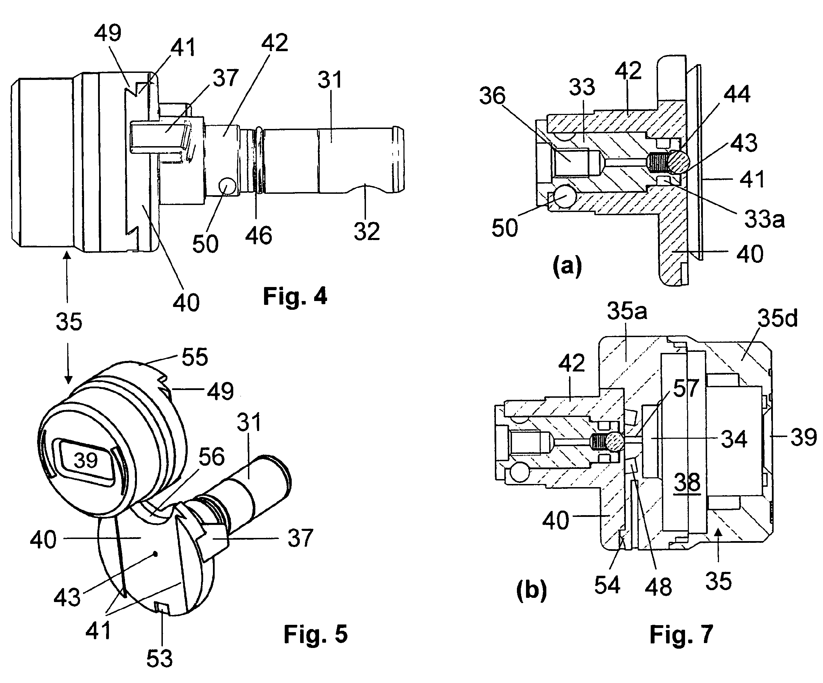

Die Einrichtung zur Regulierung der Druckluftzufuhr umfasst weiterhin einen Gehäusestutzen 42 und eine daran einstückig angeformte Befestigungsplatte 40. Das Aufnahmeteil 33 ist verdrehbar in den hohlzylindrischen Stutzen 42 eingeschoben. Der Stutzen 42 ist über eine Befestigungsschraube 51 (Figuren 2 und 3), welche in eine Bohrung 50 am Stutzen 42 (Fig. 4) eingreift, am Spritzpistolenkörper 1 befestigt. Der Stutzen 42 und die daran angeformte Halteplatte 40 können daher nicht gegenüber dem Spritzpistolenkörper 1 verdreht werden. An der Befestigungsplatte 40 ist eine Druckmesseinrichtung 35 abnehmbar befestigt.

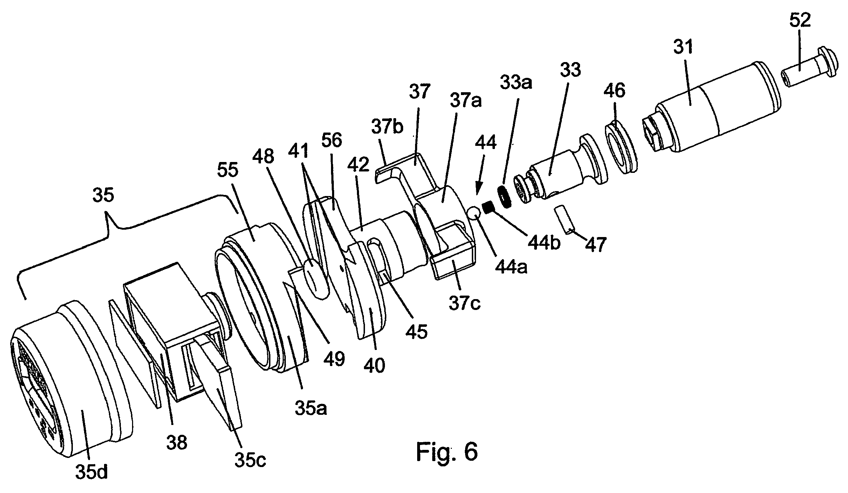

Die Einrichtung zur Regulierung der Druckluftzufuhr mit der daran befestigten Druckmesseinrichtung 35 ist in Figur 4 in einer Seitenansicht und in Figur 6 in einer Explosionsdarstellung im Detail gezeigt. Aus der Explosionsdarstellung der Figur 6 geht der Aufbau der Einrichtung zur Regulierung der Druckluftzufuhr und der daran befestigten Druckmesseinrichtung 35 im Einzelnen hervor. Wie in den Figuren 4 und 6 gezeigt, umfasst die Einrichtung zur Regulierung der Druckluftzufuhr den hohlzylindrischen Stutzen 42, an dem einstückig die Befestigungsplatte 40 angeformt ist. Der Stutzen 42 und die Befestigungsplatte 40 sind bevorzugt aus Metall. Die Befestigungsplatte 40 und oder der Stutzen 42 können auch in Kunststoff, Kombinationen aus Metall/Kunststoff oder anderen geeigneten Materialien ausgeführt werden. In dem hohlzylindrischen Stutzen 42 ist ein Langloch 45 am Außenumfang des Stutzens 42 eingebracht, welches sich über einen Winkelbereich von ca. 90° erstreckt. Dieser Winkelbereich sollte in etwa eingehalten werden. Bei einem Winkel von ca. 60° wäre nämlich gar keine ausreichende Drehbewegung möglich; bei einem Winkel von ca. 180° wäre die Drehbewegung unerwünscht groß. In der Befestigungsplatte 40 ist eine zentrale Durchgangsbohrung 43 eingebracht. In dem hohlzylindrischen Stutzen 42 ist der in Figur 6 dunkel gezeichnete vordere Teil des Aufnahmeteils 33 drehbar eingeschoben. Das Aufnahmeteil 33 ist über eine formschlüssige Verbindung, z.B. einen Vierkant (Sechskant) drehfest mit der Hülse 31 verbunden und über eine Befestigungsschraube 52 am Aufnahmeteil 33 fixiert und über einen hier als Dichtungsring 46 ausgebildetes Dichtungselement abgedichtet. Eine Dichtung könnte auch angespritzt oder anderweitig befestigt werden. Über den Außenumfang des hohlzylindrischen Stutzens 42 ist ein Regulierhebel 37 geschoben und gegenüber dem Stutzen 42 verdrehbar angeordnet. Der Regulierhebel 37 weist eine ringförmige Basis 37a mit zwei daran einstückig angeformten Flügeln 37b, 37c auf und ist über einen Verbindungsbolzen 47, der durch das Langloch 45 greift, mit dem Aufnahmeteil 33 verbunden. Der Regulierhebel 37 kann in einem durch das Langloch 45 vorgegebenen Winkelbereich gegenüber dem Stutzen 42 verdreht werden. Bei Drehung des Regulierhebels 37 dreht sich das daran über den Bolzen 47 angelenkte Aufnahmeteil 33 und die drehfest damit verbundene Hülse 31. Dadurch kann bei Drehung des Regulierhebels 37 die dem Druckluftzufuhrkanal 23 aus dem Druckluftkanal 22 zugeführte Druckluft reguliert werden. Die Endbereiche der beiden Flügel 37b, 37c des Regulierhebels übergreifen den Außenumfang der Befestigungsplatte 40 und am Außenumfang der Befestigungsplatte sind bevorzugt Markierungen angebracht, an denen die Stellung des Regulierhebels abgelesen werden kann.

Zur Erfassung des Drucks der dem Druckluftzufuhrkanal 23 zugeführten Druckluft ist die Druckluftmesseinrichtung 35 vorgesehen, welche abnehmbar an der Einrichtung zur Regulierung der Druckluftzufuhr befestigt ist. Der Aufbau der Druckmesseinrichtung 35 und die Art der Befestigung an der Einrichtung zur Regulierung der Druckluftzufuhr sind ebenfalls aus der Explosionsdarstellung der Figur 6 ersichtlich. Die Druckmesseinrichtung 35 umfasst ein Gehäuseunterteil 35a, eine Druckmesseinheit 35b mit einem Druckaufnehmer 38 sowie einen Gehäusedeckel 35d. Bei dem in den Zeichnungen dargestellten Ausführungsbeispiel ist die Druckmesseinrichtung 35 als Digitalmanometer mit einer elektronischen Digitalanzeige 39 ausgebildet. Es kann statt eines Digitalmanometers jedoch auch ein Manometer mit einer analogen Druckanzeige (Zeigeranzeige) verwendet werden. Bei dem hier zeichnerisch dargestellten Digitalmanometer ist eine herausnehmbare Batterie 35c zur Energieversorgung vorgesehen. Um die Batterie 35c austauschen zu können, ist der Gehäusedeckel 35d vom Gehäuseunterteil 35a abnehmbar.

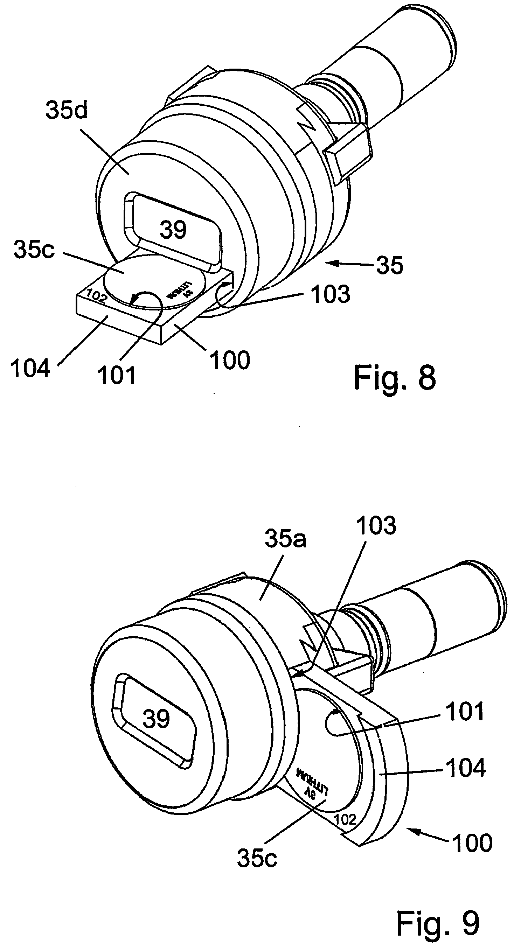

In den beiden anderen, zeichnerisch in den Figuren 8 und 9 dargestellten Ausgestaltungsformen ist im Gehäuseteil 35 eine Schublade 100 angeordnet, in der die Batterie 35c untergebracht ist und demgemäß problemlos herein- und herausgeschoben und daher gewechselt werden kann, ohne dass das Digitalmanometer zerlegt werden muss. Die Schublade 100 ist zweckmäßigerweise im wesentlichen quaderförmig gestaltet und besitzt eine eingelassenes zylindrisches Sackloch 101, dessen Größe derart auf die Größe der hier als Knopfzelle ausgebildeten Batterie 35c abgestimmt ist, dass deren Oberfläche plan mit der Oberfläche 102 der Schublade 100 abschließt. Die Schublade 100 ist in einer im Gehäuse 35 vorgesehenen Öffnung 103 verschiebbar gelagert und mittels (nicht dargestellten) Dichtelementen hermetisch dicht gegen das Gehäuse 35 abgedichtet. Die Dichtungswirkung kann, wenn die Schublade aus Kunststoff besteht, vorzugsweise durch an die Kunststoffschublade angeformte Dichtlippen bewerkstelligt werden. Sie kann aber auch durch O-Ringe oder ähnliches bewerkstelligt werden. Bei der Ausführungsform nach Figur 8 ist die Schublade 100 dabei unmittelbar unterhalb der Digitalanzeige 39 im Gehäusedeckel 35d und damit vorne an der Druckmesseinrichtung 35 angeordnet, während sie bei der Ausführungsform nach Figur 9 in einem seitlichen Bereich des Gehäuseunterteils 35a vorgesehen ist. Da dieses Gehäuseunterteil 35a abgerundet ist, ist der vordere Bereich 104 der Schublade 100 hier ebenfalls abgerundet. Die Länge der Schublade 100 ist in beiden Ausführungsformen derart gewählt, dass der vordere Bereich 104 der Schublade 100 geringfügig über der Oberfläche des Gehäusedeckels 35d bzw. des Gehäuseunterteils 35a absteht, damit man die Schublade 100 zum Batteriewechsel gut greifen kann. Es wäre aber auch möglich, einen hakenartigen oder knopfartigen Vorsprung am vorderen Bereich 104 der Schublade 100 als Handhabe vorzusehen. Andere Ausgestaltungen der Schublade 100, zum Beispiel in Rahmenform oder ähnlich, sind denkbar.

In einer anderen, nicht dargestellten Ausführungsform ist die Schublade 100 an ihrem dem vorderen Bereich 104 gegenüberliegenden hinteren Bereich über eine oder mehrere Federn am Gehäuse 35 abgestützt. An der Schublade 100 und/oder an der Gehäuseöffnung 103 sind Positionierungen für die Schublade 100, beispielsweise Rastelemente vorgesehen.. Dadurch kann ein automatisches Öffnen und ggf. Schließen der Schublade 100 nach Ausüben von geringem manuellem Druck auf den vorderen Bereich 104 der Schublade 100 realisiert werden.

An der Rückseite des Gehäuseunterteils 35a sind Befestigungselemente 49 vorgesehen. Diese Befestigungselemente 49 sind so ausgebildet, dass sie mit komplementären Befestigungselementen 41 an der Befestigungsplatte 40 zusammenwirken, wenn die Druckmesseinrichtung 35 an der Einrichtung zur Regulierung der Druckluftzufuhr befestigt wird. Bei dem zeichnerisch hier dargestellten Ausführungsbeispiel handelt es sich bei den Befestigungselementen 49 und 41 um komplementäre Elemente einer Schwalbenschwanz-Verbindung. Zur Befestigung der Druckmesseinrichtung 35 an der Einrichtung zur Regulierung der Druckluftzufuhr werden die an der Rückseite des Gehäuseunterteils 35a angeordneten Befestigungselemente 49 in die komplementären Befestigungselemente 41 der Schwalbenschwanz-Verbindung eingeschoben, wie in Figur 3 mit dem Doppelpfeil angedeutet. Um ein unbeabsichtigtes Lösen der Schwalbenschwanz-Verbindung zu verhindern, ist zusätzlich eine Rastverbindung vorgesehen, welche durch eine Rastnut 53 in der Befestigungsplatte 40 sowie eine dazu komplementäre Rastnase 54 an der Rückseite des Gehäuseunterteils 35a verwirklicht ist (Figuren 4, 5 und 7). Um eine korrekte Positionierung der Druckmesseinrichtung 35 an der Befestigungsplatte 40 zu gewährleisten, ist weiterhin an der Rückseite des Gehäuseunterteils 35a ein Vorsprung 55 vorgesehen, der mit einer komplementär geformten Ausnehmung 56 der Befestigungsplatte 40 zusammenwirkt (Figur 5). Die Ausnehmung 56 ermöglicht bei abgenommener Druckmesseinrichtung das vollständige Ausschrauben der Stellschraube 14 und die Demontage der Düsennadel 6 ohne Demontage der Befestigungsplatte 40. Außerdem ermöglicht sie ein besonders einfaches Positionieren der Anzeige. Die erfindungsgemäße Lösung ist also sehr wirkungsvoll und dennoch einfach handhabbar.

Die Druckmessseinrichtung 35 könnte aber auch mittels einer Klemm-, Schraub-, Bajonett- oder Rastverbindung, mittels einer Magnetverbindung oder auf andere Weise an der Einrichtung 31, 33, 37, 42, 40 zur Regulierung der Druckluftzufuhr befestigt sein.

Zur Übertragung des Drucks der Druckluft aus dem Druckluftzufuhrkanal 23 an die Druckmeßeinrichtung 35 ist in der Einrichtung zur Regulierung der Druckluftzufuhr ein Luftkanal 36, 43 vorgesehen, der eine Verbindung vom Druckluftzufuhrkanal zur Druckmesseinrichtung 35 herstellt. Der Luftkanal umfasst eine in dem Aufnahmeteil 33 in dessen Längsrichtung verlaufende Kapillare 36, welche in die Durchgangsbohrung 43 in der Befestigungsplatte 40 mündet. Das Aufnahmeteil 33 ist mittels eines O-Rings 33a gegen den hohlzylindrischen Stutzen 42 abgedichtet. An der Rückseite des Gehäuseunterteils 35a der Druckmesseinrichtung 35 ist eine Lufteingangsöffnung 57 vorgesehen (Figur 7). Wenn die Druckmesseinrichtung an der Einrichtung zur Regulierung der Druckluftzufuhr befestigt ist, ist die Lufteingangsöffnung 57 über die Durchgangsbohrung 43 und die Kapillare 36 mit dem Druckluftzufuhrkanal 22, 23 verbunden und der Druck des Druckluftzufuhrkanals steht an der Druckmesseinrichtung 35 an.

Die druckübertragende Verbindung zwischen der Druckmesseinrichtung 35 und der Einrichtung zur Regulierung der Druckluftzufuhr ist in den Schnittzeichnungen der Figuren 7a und 7b im Detail dargestellt. In Figur 7a ist der hintere Bereich der Einrichtung zur Regulierung der Druckluftzufuhr mit dem Stutzen 42 und der daran angeordneten Befestigungsplatte 40 und der durch das Aufnahmeteil 33 verlaufenden Kapillare 36 gezeigt. Die Figur 7a zeigt die Einrichtung zur Regulierung der Druckluftzufuhr bei abgenommener Druckmesseinrichtung. In diesem Zustand ist die Durchgangsbohrung 43 in der Befestigungsplatte 40 durch ein Ventil 44 verschlossen. Durch das Ventil 44 wird bei abgenommener Druckmesseinrichtung 35 zuverlässig verhindert, dass Reinigungsmittel oder Lack unkontrolliert in die Kapillare 36 eindringen und diese verstopfen kann. Auch wird durch das Ventil 44 das Austreten von Druckluft und das Eindringen von Flüssigkeit verhindert.

Bei dem zeichnerisch hier dargestellten Ausführungsbeispiel ist das Ventil 44 durch ein Kugelventil mit einer Verschlusskugel 44a und einer Feder 44b gebildet (Fig. 6), wobei die Feder 44b die Verschlusskugel 44a in die Durchgangsbohrung 43 presst, wenn die Druckmesseinrichtung 35 nicht an der Befestigungsplatte 40 befestigt ist. In dieser Position ragt ein Teil der Verschlusskugel 44a über die Oberfläche der Befestigungsplatte 40 hinaus, wie in Figur 7a gezeigt. Wenn die Druckmesseinrichtung 35 an der Befestigungsplatte 40 befestigt wird, schiebt die Rückseite des Gehäuseunterteils 35a der Druckmesseinrichtung 35 die Verschlusskugel 44a gegen die Kraft der Feder 44b aus der Durchgangsbohrung 43 zurück in Richtung der Kapillare 36. Dadurch öffnet sich der Luftkanal 36, 43 selbsttätig. Zur Herstellung der Verbindung zwischen dem Luftkanal 36, 43 und der Lufteingangsöffnung 57 an der Druckmesseinrichtung 35 ist die Lufteingangsöffnung 57 gegenüber der Kapillare 36 radial leicht versetzt. Durch den Radialversatz wird die Lufteingangsöffnung 57 an der Druckmesseinrichtung 35 nicht durch die Verschlusskugel 44a verschlossen und es steht der im Druckluftzufuhrkanal 23 herrschende Druck an der Druckmesseinrichtung 35 an. Dieser Effekt könnte auch durch ein andersartiges Ventil, beispielsweise ein Kegelventil oder ein Plattenventil, erreicht werden. In der Druckmesseinrichtung 35 ist ein Druckerfassungsraum 34 vorgesehen, welcher mit der Lufteingangsöffnung 57 in Verbindung steht. In der Druckmesseinrichtung 35 ist ferner ein Druckaufnehmer 38, beispielsweise in Form eines piezoresistiven Druckaufnehmers, angeordnet, über den der im Druckerfassungsraum 34 anstehende Druck erfasst und von einer digitalen oder analogen Anzeigeeinrichtung 39 angezeigt wird. Um eine dichte Verbindung zwischen der Lufteingangsöffnung 57 an der Druckmesseinrichtung 35 und der Durchgangsbohrung 43 in der Befestigungsplatte 40 zu gewährleisten, ist an der Rückseite des Gehäuseunterteils 35a eine Dichtung 48 in Form eines O-Rings oder einer eingespritzten Kunststoffdichtung um die Lufteingangsöffnung 57 angeordnet. Diese Dichtung 48 wird durch die Schwalbenschwanz-Verbindung der Befestigungselemente 41, 49 zwischen der Rückseite des Gehäuseunterteils 35a und der Vorderseite der Befestigungsplatte 40 gepresst, so dass der Druck im Übergangsbereich zwischen der Durchgangsbohrung 43 in der Befestigungsplatte 40 und der Lufteingangsöffnung 57 nicht entweichen kann.

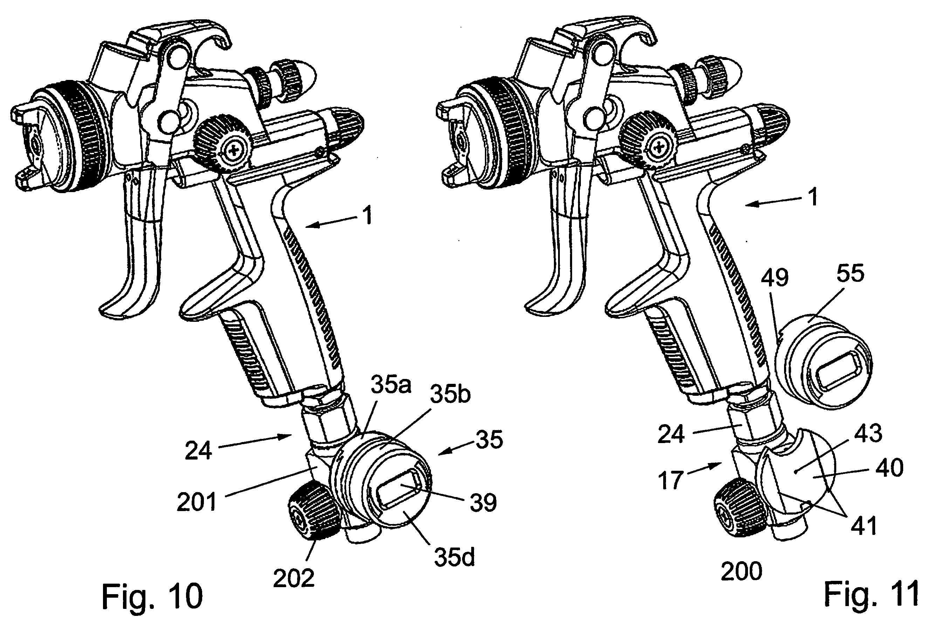

Bei der in den Figuren 10 und 11 dargestellten Spritzpistole ist die Ventilanordnung 17 zur Steuerung der Druckluftzufuhr im Bereich des Anschlusses 24 für die (nicht dargestellte) Druckluftleitung am Pistolenkörper 1 vorgesehen. An dem hohlzylindrischen Anschlussstück 200 kann z.B. ein Druckluftschlauch angeschlossen werden. Die Ventilanordnung 17 besitzt wie üblich einen Ventilkörper 201 mit einem Regulierknopf 202. Eine Druckmesseinrichtung 35, die wie die in den Figuren 4 bis 7 gezeigte Druckmesseinrichtung 35 mit einer Digitalanzeige 39, einem Gehäuseunterteil 35a, einer Druckmesseinheit 35b, einer Batterie (nicht dargestellt) und einem Gehäusedeckel 35d ausgestaltet ist, ist abnehmbar am Ventilkörper 201 der Ventilanordnung 17 angebracht.. Hierzu ist in der Ventilkörper 201 ein Loch vorgesehen, das als Messöffnung dient.. Eine Befestigungsplatte 40, die wie die in den vorherigen Ausführungsbeispielen, z.B. in Fig. 4, gezeigte Befestigungsplatte 40 ausgebildet ist und demgemäß einen Stutzen mit einer zentralen Durchgangsbohrung 43 besitzt, mit dieser Durchgangsbohrung 43 fluchtend zu dem Loch im Ventilkörper 201 verdrehsicher befestigt. Sie kann zum Beispiel angeschraubt, angeklebt oder angeschweißt sein. Eine Ventilaufbau mit gleich oder ähnlich den in Fig. 6 gezeigten Einzelheiten (Kugelventil 44 usw.) ist ebenfalls vorgesehen; die Druckmessung kann demgemäß wie zuvor beschrieben erfolgen. An der Befestigungsplatte 40 wird die Druckmesseinrichtung 35 mit Hilfe der Schwalbenschwanz-Verbindung der Befestigungselemente 41, 49 zwischen der Rückseite des Gehäuseunterteils 35a und der Vorderseite der Befestigungsplatte 40 gepresst.

Die Erfindung ist nicht auf die konkret beschriebenen und dargestellten Ausführungsformen beschränkt, andere vorteilhafte Ausgestaltungen sind ohne Weiteres denkbar.

Gegenüber der aus dem Stand der Technik bekannten Anordnung zeichnen sich die bevorzugten Ausführungsformen der erfindungsgemäße Spritzpistole dadurch aus, dass die Druckmesseinrichtung 35 abnehmbar an der Einrichtung zur Regulierung der Druckluftzufuhr befestigt ist. Die Einrichtung zur Regulierung der Druckluftzufuhr umfasst dabei zweckmäßig eine Befestigungsplatte 40, welche über einen daran angeordneten Stutzen 42 fest und gegen Verdrehen gesichert mit dem Pistolenkörper verbunden ist. An der Einrichtung zur Regulierung der Druckluftzufuhr ist ein manuell betätigbarer Regulierhebel vorgesehen, über den die dem Druckluftzufuhrkanal zugeführte Druckluft eingestellt werden kann, ohne dass hierfür die Druckmesseinrichtung gegenüber dem Pistolenkörper verdreht werden muss. Dies gewährleistet, dass die Druckmesseinrichtung immer in der gleichen Position gegenüber dem Pistolenkörper an der Einrichtung zur Regulierung der Druckluftzufuhr befestigt ist. Die Druckanzeige 39 der Druckmesseinrichtung ist aus diesem Grunde bei jeder Stellung der Regulierung der Druckluftzufuhr gut ablesbar. Die Druckmesseinrichtung ist an der Einrichtung zur Regulierung der Druckluftzufuhr über Befestigungselemente 41, 49 leicht abnehmbar befestigt. Dies ermöglicht ein einfaches und schnelles manuelles Abnehmen der Druckmesseinrichtung ohne Zuhilfenahme von Werkzeug, wenn diese beispielsweise bei Lackierarbeiten an schwer zugänglichen Stellen stört. Durch die einfache Abnahme der Druckmesseinrichtung 35 kann die Druckmesseinrichtung auch für mehrere verschiedene Spritzpistolen verwendet werden, ohne dass ein komplizierter Ausbau- bzw. Einbau in den Pistolenkörper von anderen Spritzpistolen erforderlich wäre. Durch die einfache Abnehmbarkeit der Druckmesseinrichtung von der Einrichtung zur Regulierung der Druckluftzufuhr ist darüber hinaus auch ein einfacher Batteriewechsel bei digitalen Druckmesseinrichtungen ermöglicht.

Auch für Reinigungsarbeiten an der Spritzpistole kann die Druckmesseinrichtung einfach abgenommen werden, so dass diese nicht verschmutzt oder beschädigt wird. Dies ist besonders bei der Verwendung in Pistolenreinigungsautomaten vorteilhaft..

Die Druckmesseinrichtung 35 mit den oben beschriebenen Vorteilen kann bei Verwendung Bodenplatte, die im Bereich 42 mit einem Gewinde etc. versehen ist, anstelle eines handelsüblichen Nanometers z.B. bei der Reinigung oder Mehrfachverwendung etc. eingesetzt werden.

Ein weiterer Vorteil der Erfindung ist, dass die Spritzpistole auch mit abgenommener Druckmesseinrichtung 35 betrieben werden kann.

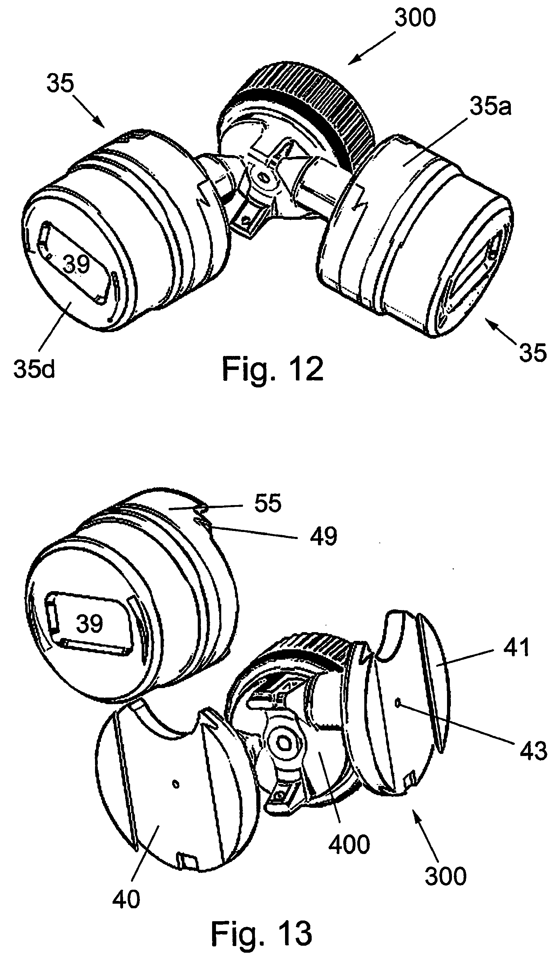

In den Figuren 12 und 13 ist dargestellt, wie die erfindungsgemäße Druckmesseinrichtungen 35 anderweitig an einer Spritzpistole eingesetzt werden können. Eine Prüfluftkappe 300 herkömmlicher Bauart, die zur Überprüfung der Zentrums- und Hornluft dient, ist mit zwei Druckmesseinrichtungen 35 ausgestattet. Zwei Befestigungsplatten 40 sind hier über Befestigungskegel 400 verdrehsicher, z.B. durch einschrauben, und dicht in der Prüfluftkappe 300 befestigt. Ein Ventilaufbau mit gleich oder ähnlich den in Fig. 6 gezeigten Einzelheiten (Kugelventil 44 usw.) ist ebenfalls vorgesehen; die Druckmessung kann demgemäß auch hier wie zuvor beschrieben erfolgen. Die Befestigungsplatten 40 besitzen auch hier jeweils eine zentrale Durchgangsbohrung 43. Die Druckmesseinrichtungen 35 besitzen auch eine Digitalanzeige 39, ein Gehäuseunterteil 35a, eine Druckmesseinheit 35b, eine Batterie (nicht dargestellt) und einen Gehäusedeckel 35d und sind mit Hilfe der Schwalbenschwanz-Verbindung der Befestigungselemente 41, 49 zwischen der Rückseite des Gehäuseunterteils 35a und der Vorderseite der Befestigungsplatte 40 lösbar befestigt.

Die Druckmesseinrichtung 35 kann aber auch anderweitig als bei Spritzpistolen eingesetzt werden, zum Beispiel bei einer Filtereinheit im Lackierkabinenbereich anstelle eines üblichen Manometers, oder zur Reifendruckmessung von Kraftfahrzeugreifen oder Fahrradreifen. Einsatzmöglichkeiten als Ersatz üblicher Druckmesseinheiten in anderen industriellen Bereichen (Kesselanlagen) sowie nicht industriellen Bereichen sind ebenfalls denkbar.

## Patentansprüche

1. Spritzpistole mit
- einem Pistolenkörper (1),
- einer am Pistolenkörper (1) angeordneten Düsenanordnung (9),
- einem im Pistolenkörper (1) angeordneten Druckluftzufuhrkanal (22, 23) mit einer Ventilanordnung (17) zur Steuerung der Druckluftzufuhr zur Düsenanordnung (9),
- einer Einrichtung (31, 33, 37, 42, 40) zur Regulierung der Druckluftzufuhr, und
- einer Druckmesseinrichtung (35) zur Erfassung und Anzeige des Drucks im Druckluftzufuhrkanal (22),
- wobei die Druckmesseinrichtung (35) abnehmbar an der Einrichtung (31, 33, 37, 42, 40) zur Regulierung der Druckluftzufuhr befestigt ist,
**dadurch gekennzeichnet, dass** an der Einrichtung (31, 33, 37, 42, 40) zur Regulierung der Druckluftzufuhr eine Befestigungsplatte (40) zur Befestigung der Druckmesseinrichtung (35) vorgesehen ist, welche Befestigungselemente (41, 53, 56) aufweist, die mit komplementären Befestigungselementen (49, 54, 55) an der Druckmesseinrichtung (35) zusammenwirken, wenn die Druckmesseinrichtung (35) an der Einrichtung (31, 33, 37, 42, 40) zur Regulierung der Druckluftzufuhr befestigt wird.

2. Spritzpistole nach Anspruch 1, **dadurch gekennzeichnet, dass** die Druckmesseinrichtung (35) mittels einer Steck-, Klemm-, Schraub-, Bajonett- oder Rastverbindung oder mittels einer Magnetverbindung an der Einrichtung (31, 33, 37, 42, 40) zur Regulierung der Druckluftzufuhr befestigt ist.

3. Spritzpistole mit einer an der Einrichtung (31, 33, 37, 42, 40) zur Regulierung zur Druckluftzufuhr befestigten Druckmesseinrichtung (35), bei der es sich um ein elektronisches oder mechanisches Manometer mit einer Digitalanzeige (39) oder einer analogen Druckanzeige handelt.

4. Spritzpistole nach einem der voranstehenden Ansprüche, **dadurch gekennzeichnet, dass** die Einrichtung (31, 33, 37, 42, 40) zur Regulierung der Druckluftzufuhr eine durch ein Stellglied (33, 37) verstellbares Element, insbesondere eine Hülse (31) mit einer Querbohrung (32) zur Einstellung eines Durchgangsquerschnitts des Druckluftzufuhrkanals (22, 23) enthält.

5. Spritzpistole nach Anspruch 4, **dadurch gekennzeichnet, dass** das Stellglied (33, 37) einen manuell betätigbaren Regulierhebel (37) umfasst.

6. Spritzpistole nach Anspruch 5, **dadurch gekennzeichnet, dass** der Regulierhebel (37) gegenüber der Befestigungsplatte (40) verdrehbar ist.

7. Spritzpistole nach einem der Ansprüche 4 bis 6, **dadurch gekennzeichnet, dass** das Stellglied (33, 37) ein mit der Hülse (31) verdrehfest verbundenes Aufnahmeteil (33) aufweist und dass der Regulierhebel (37) verdrehfest mit dem Aufnahmeteil (33) gekoppelt ist.

8. Spritzpistole nach einem der voranstehenden Ansprüche, **dadurch gekennzeichnet, dass** an der Befestigungsplatte (40) ein hohles Bauteil, insbesondere ein hohlzylindrischer Stutzen (42) angeordnet ist.

9. Spritzpistole nach Anspruch 8, **dadurch gekennzeichnet, dass** das Aufnahmeteil (33) in den hohlzylindrischen Stutzen (42) eingreift und dass das der Hülse (31) abgewandte Ende des Aufnahmeteils (33) an der Befestigungsplatte (40) anliegt.

10. Spritzpistole nach einem der Ansprüche 7 bis 9, **dadurch gekennzeichnet, dass** in dem Aufnahmeteil (33) eine Kapillare (36) verläuft, welche mit dem Druckluftzufuhrkanal (22, 23) in Verbindung steht und dass in der Befestigungsplatte (40) eine Durchgangsbohrung (43) vorgesehen ist, welche mit der Kapillare (36) in Verbindung steht.

11. Spritzpistole nach einem der voranstehenden Ansprüche, **dadurch gekennzeichnet, dass** in der Einrichtung (31, 33, 37, 42, 40) zur Regulierung der Druckluftzufuhr ein Luftkanal (36, 43) verläuft, welcher an seinem einen Ende mit dem Druckluftzufuhrkanal (22, 23) in Verbindung steht und an seinem anderen Ende mit einem Ventil (44) verschlossen ist, wobei sich das Ventil (44) öffnet, wenn die Druckmesseinrichtung (35) an der Einrichtung (31, 33, 37, 42, 40) zur Regulierung der Druckluftzufuhr befestigt wird.

12. Spritzpistole nach einem der voranstehenden Ansprüche, **dadurch gekennzeichnet, dass** in der Einrichtung (31, 33, 37, 42, 40) zur Regulierung der Druckluftzufuhr ein Luftkanal (36, 43) verläuft, welcher an seinem einen Ende mit dem Druckluftzufuhrkanal (22, 23) in Verbindung steht und an seinem anderen Ende mit einem Ventil (44) verschlossen ist, wobei sich das Ventil (44) selbsttätig schließt, wenn die Druckmesseinrichtung (35) von der Einrichtung (31, 33, 37, 42, 40) zur Regulierung der Druckluftzufuhr entfernt wird.

13. Spritzpistole nach Anspruch 11 oder 12, **dadurch gekennzeichnet, dass** das Ventil (44) in der Durchgangsbohrung (43) angeordnet und als Kugelventil ausgebildet ist.

14. Spritzpistole nach Anspruch 11 oder 12, **dadurch gekennzeichnet, dass** die Druckmesseinrichtung (35) über eine Lufteingangsöffnung (57) verfügt, welche mit dem Luftkanal (36, 43) in der Einrichtung (31, 33, 37, 42, 40) zur Regulierung der Druckluftzufuhr in Verbindung steht, wenn die Druckmesseinrichtung (35) an der Einrichtung (31, 33, 37, 42, 40) zur Regulierung der Druckluftzufuhr befestigt ist.

15. Spritzpistole nach Anspruch 14, **dadurch gekennzeichnet, dass** um die Lufteingangsöffnung (57) eine Dichtung (48) angeordnet ist, welche die Verbindung zwischen der Lufteingangsöffnung (57) und dem Luftkanal (36, 43) abdichtet wenn die Druckmesseinrichtung (35) an der Einrichtung (31, 33, 37, 42, 40) zur Regulierung der Druckluftzufuhr befestigt ist.

16. Spritzpistole nach einem der voranstehenden Ansprüche, **dadurch gekennzeichnet, dass** in der Befestigungsplatte (40) eine Ausnehmung (56) vorgesehen ist, welche so gestaltet ist, dass eine im Pistolenkörper (1) angeordnete Düsennadel (6) bei abgenommener Druckmesseinrichtung (35) aus dem Pistolenkörper (1) herausgezogen werden kann.

17. Spritzpistole nach einem der voranstehenden Ansprüche, **dadurch gekennzeichnet, dass** die Druckmesseinrichtung (35) ein Gehäuse (35a, 35d) umfasst, an dem Befestigungselemente (49, 54, 55) vorgesehen sind, welche mit komplementären Befestigungselementen (41, 53, 56) an der Einrichtung (31, 33, 37, 42, 40) zur Regulierung der Druckluftzufuhr zusammenwirken, wenn die Druckmesseinrichtung dort befestigt wird.

18. Spritzpistole nach Anspruch 17, **dadurch gekennzeichnet, dass** die Befestigungselemente (49, 54, 55) an der Druckmesseinrichtung (35) Klemm-, Steck- oder Rastelemente (54) umfassen, welche auswechselbar am Gehäuse (35a, 35d) befestigt sind.

19. Spritzpistole nach Anspruch 17, **dadurch gekennzeichnet, dass** die Befestigungselemente (49, 54, 55) einstückig am Gehäuse (35a, 35d) der Druckmesseinrichtung (35) angeformt sind.

20. Spritzpistole nach einem der voranstehenden Ansprüche, **dadurch gekennzeichnet, dass** die Druckmesseinrichtung (35) ein Gehäuse (35a, 35d) umfasst, in dem eine herausziehbare Schublade (100) angeordnet ist, welche eine Batterie (35c) aufnimmt.

21. Spritzpistole nach Anspruch 20, **dadurch gekennzeichnet, dass** die Schublade (100) ein Sackloch (101) zur Aufnahme der Batterie (35c) aufweist.

22. Spritzpistole nach Anspruch 20, **dadurch gekennzeichnet, dass** die Schublade (100) federnd am Gehäuse (35a, 35d) abgestützt und mit einer Positionierung versehen ist.

23. Spritzpistole nach einem der voranstehenden Ansprüche, **dadurch gekennzeichnet, dass** die Druckmesseinrichtung (35) ein Gehäuse (35a, 35d) mit einem Gehäuseunterteil (35a) und einem Gehäusedeckel (35d) umfasst, wobei der Gehäusedeckel (35d) abnehmbar am Gehäuseunterteil (35a) befestigt ist.

24. Spritzpistole nach Anspruch 20, **dadurch gekennzeichnet, dass** in dem Gehäuse (35a, 35d) eine herausnehmbare Druckmesseinheit (35b) eingesetzt ist. oder dass auf das Gehäuse (35a, 35d) eine Druckmesseinheit aufgesetzt ist.

## Claims

1. Spray gun having
- a gun body (1),
- a nozzle arrangement (9) arranged on the gun body (1),
- a compressed air supply duct (22, 23) arranged in the gun body (1) and having a valve arrangement (17) for controlling the compressed air supply to the nozzle arrangement (9),
- a device (31, 33, 37, 42, 40) for regulating the compressed air supply, and
- a pressure-measuring device (35) for detecting and indicating the pressure in the compressed air supply duct (22),
- wherein the pressure-measuring device (35) is fixed removably on the device (31, 33, 37, 42, 40) for regulating the compressed air supply,
**characterized in that** a fixing plate (40) for fixing the pressure-measuring device (35) is provided on the device (31, 33, 37, 42, 40) for regulating the compressed air supply, which fixing plate (40) has fixing elements (41, 53, 56) which interact with complementary fixing elements (49, 54, 55) on the pressure-measuring device (35) when the pressure-measuring device (35) is fixed on the device (31, 33, 37, 42, 40) for regulating the compressed air supply.

2. Spray gun according to Claim 1, **characterized in that** the pressure-measuring device (35) is fixed on the device (31, 33, 37, 42, 40) for regulating the compressed air supply by means of a plug-in, clamping, screwed, bayonet or latching joint or by means of a magnetic joint.

3. Spray gun having a pressure-measuring device (35) fixed on the device (31, 33, 37, 42, 40) for regulating the compressed air supply, the pressure-measuring device being an electronic or mechanical manometer having a digital indicator (39) or an analogue pressure indicator.

4. Spray gun according to one of the preceding claims, **characterized in that** the device (31, 33, 37, 42, 40) for regulating the compressed air supply comprises an element that can be adjusted by means of an adjusting element (33, 37), in particular a sleeve (31) having a transverse bore (32) for adjusting a cross section of passage of the compressed air supply duct (22, 23).

5. Spray gun according to Claim 4, **characterized in that** the adjusting element (33, 37) comprises a manually actuable regulating lever (37).

6. Spray gun according to Claim 5, **characterized in that** the regulating lever (37) can be twisted relative to the fixing plate (40).

7. Spray gun according to one of Claims 4 to 6, **characterized in that** the adjusting element (33, 37) has a receiving part (33) which is connected in a torsionally rigid manner to the sleeve (31), and **in that** the regulating lever (37) is coupled in a torsionally rigid manner to the receiving part (33).

8. Spray gun according to one of the preceding claims, **characterized in that** a hollow component, in particular a hollow-cylindrical stub (42), is arranged on the fixing plate (40).

9. Spray gun according to Claim 8, **characterized in that** the receiving part (33) engages in the hollow-cylindrical stub (42), and **in that** the end of the receiving part (33) which faces away from the sleeve (31) rests against the fixing plate (40).

10. Spray gun according to one of Claims 7 to 9, **characterized in that**, in the receiving part (33), there is a capillary (36) which is connected to the compressed air supply duct (22, 23), and **in that** a through bore (43), which is connected to the capillary (36), is provided in the fixing plate (40).

11. Spray gun according to one of the preceding claims, **characterized in that**, in the device (31, 33, 37, 42, 40) for regulating the compressed air supply, there is an air duct (36, 43) which is connected at one end to the compressed air supply duct (22, 23) and is closed at its other end by a valve (44), the valve (44) opening when the pressure-measuring device (35) is fixed on the device (31, 33, 37, 42, 40) for regulating the compressed air supply.

12. Spray gun according to one of the preceding claims, **characterized in that**, in the device (31, 33, 37, 42, 40) for regulating the compressed air supply, there is an air duct (36, 43) which is connected at one end to the compressed air supply duct (22, 23) and is closed at its other end by a valve (44), the valve (44) closing automatically when the pressure-measuring device (35) is removed from the device (31, 33, 37, 42, 40) for regulating the compressed air supply.

13. Spray gun according to Claim 11 or 12, **characterized in that** the valve (44) is arranged in the through bore (43) and is designed as a ball valve.

14. Spray gun according to Claim 11 or 12, **characterized in that** the pressure-measuring device (35) has an air inlet opening (57) which is connected to the air duct (36, 43) in the device (31, 33, 37, 42, 40) for regulating the compressed air supply when the pressure-measuring device (35) is fixed on the device (31, 33, 37, 42, 40) for regulating the compressed air supply.

15. Spray gun according to Claim 14, **characterized in that**, arranged around the air inlet opening (57), there is a seal (48) which seals the connection between the air inlet opening (57) and the air duct (36, 43) when the pressure-measuring device (35) is fixed on the device (31, 33, 37, 42, 40) for regulating the compressed air supply.

16. Spray gun according to one of the preceding claims, **characterized in that** a recess (56) is provided in the fixing plate (40), which recess is configured in such a way that a nozzle needle (6) arranged in the gun body (1) can be pulled out of the gun body (1) when the pressure-measuring device (35) is removed.

17. Spray gun according to one of the preceding claims, **characterized in that** the pressure-measuring device (35) comprises a housing (35a, 35d) on which fixing elements (49, 54, 55) are provided, which interact with complementary fixing elements (41, 53, 56) on the device (31, 33, 37, 42, 40) for regulating the compressed air supply when the pressure-measuring device is fixed there.

18. Spray gun according to Claim 17, **characterized in that** the fixing elements (49, 54, 55) on the pressure-measuring device (35) comprise clamping, plug-in or latching elements (54) which are fixed exchangeably on the housing (35a, 35d).

19. Spray gun according to Claim 17, **characterized in that** the fixing elements (49, 54, 55) are formed integrally on the housing (35a, 35d) of the pressure-measuring device (35).

20. Spray gun according to one of the preceding claims, **characterized in that** the pressure-measuring device (35) comprises a housing (35a, 35d) in which a pull-out sliding tray (100) that accommodates a battery (35c) is arranged.

21. Spray gun according to Claim 20, **characterized in that** the sliding tray (100) has a blind hole (101) to accommodate the battery (35c).

22. Spray gun according to Claim 20, **characterized in that** the sliding tray (100) is supported resiliently on the housing (35a, 35d) and provided with a positioning means.

23. Spray gun according to one of the preceding claims, **characterized in that** the pressure-measuring device (35) comprises a housing (35a, 35d) having a housing bottom part (35a) and a housing cover (35d), the housing cover (35d) being fixed removably on the housing bottom part (35a).

24. Spray gun according to Claim 20, **characterized in that** a removable pressure-measuring unit (35b) is inserted in the housing (35a, 35d), or **in that** a pressure-measuring unit is mounted on the housing (35a, 35b).

## Revendications

1. Pistolet pulvérisateur, comprenant
- un corps de pistolet (1),
- un agencement de buse (9) disposé au niveau du corps de pistolet (1),
- un canal d'alimentation en air comprimé (22, 23) disposé dans le corps de pistolet (1), avec un agencement de soupape (17) pour commander l'alimentation en air comprimé à l'agencement de buse (9),
- un dispositif (31, 33, 37, 42, 40) de régulation de l'alimentation en air comprimé, et
- un dispositif de mesure de pression (35) pour détecter et afficher la pression dans le canal d'alimentation en air comprimé (22),
- le dispositif de mesure de pression (35) étant fixé de manière amovible au dispositif (31, 33, 37, 42, 40) pour la régulation de l'alimentation en air comprimé,
**caractérisé en ce qu'**une plaque de fixation (40) pour la fixation du dispositif de mesure de pression (35) est prévue au niveau du dispositif (31, 33, 37, 42, 40) de régulation de l'alimentation en air comprimé, laquelle présente des éléments de fixation (41, 53, 56) qui coopèrent avec des éléments de fixation complémentaires (49, 54, 55) au niveau du dispositif de mesure de pression (35), lorsque le dispositif de mesure de pression (35) est fixé au dispositif (31, 33, 37, 42, 40) de régulation de l'alimentation en air comprimé.

2. Pistolet pulvérisateur selon la revendication 1, **caractérisé en ce que** le dispositif de mesure de pression (35) est fixé au moyen d'une connexion par enfichage, par serrage, par vissage, par emboîtement à baïonnette ou par encliquetage ou au moyen d'une connexion magnétique au dispositif (31, 33, 37, 42, 40) pour la régulation de l'alimentation en air comprimé.

3. Pistolet pulvérisateur comprenant un dispositif de mesure de pression (35) fixé au dispositif (31, 33, 37, 42, 40) pour la régulation de l'alimentation en air comprimé, lequel étant un manomètre électronique ou mécanique avec un affichage numérique (39) ou un affichage de pression analogique.

4. Pistolet pulvérisateur selon l'une quelconque des revendications précédentes, **caractérisé en ce que** le dispositif (31, 33, 37, 42, 40) pour la régulation de l'alimentation en air comprimé comprend un élément réglable par un actionneur (33, 37), notamment une douille (31) avec un alésage transversal (32) pour l'ajustement d'une section transversale de passage du canal d'alimentation en air comprimé (22, 23).

5. Pistolet pulvérisateur selon la revendication 4, **caractérisé en ce que** l'actionneur (33, 37) comprend un levier de régulation (37) à commande manuelle.

6. Pistolet pulvérisateur selon la revendication 5, **caractérisé en ce que** le levier de régulation (37) peut tourner par rapport à la plaque de fixation (40).

7. Pistolet pulvérisateur selon l'une quelconque des revendications 4 à 6, **caractérisé en ce que** l'actionneur (33, 37) présente une partie de réception (33) connectée de manière solidaire en rotation à la douille (31) et **en ce que** le levier de régulation (37) est accouplé de manière solidaire en rotation à la partie de réception (33).

8. Pistolet pulvérisateur selon l'une quelconque des revendications précédentes, **caractérisé en ce qu'**un composant creux, en particulier une tubulure cylindrique creuse (42), est disposée au niveau de la plaque de fixation (40).

9. Pistolet pulvérisateur selon la revendication 8, **caractérisé en ce que** la partie de réception (33) vient en prise dans la tubulure cylindrique creuse (42) et **en ce que** l'extrémité de la partie de réception (33) opposée à la douille (31) s'applique contre la plaque de fixation (40).

10. Pistolet pulvérisateur selon l'une quelconque des revendications 7 à 9, **caractérisé en ce qu'**un capillaire (36) s'étend dans la partie de réception (33), lequel est en liaison avec le canal d'alimentation en air comprimé (22, 23) et **en ce qu'**un alésage de passage (43) est prévu dans la plaque de fixation (40), lequel est en liaison avec le capillaire (36).

11. Pistolet pulvérisateur selon l'une quelconque des revendications précédentes, **caractérisé en ce qu'**un canal d'air (36, 43) s'étend dans le dispositif (31, 33, 37, 42, 40) pour la régulation de l'alimentation en air comprimé, lequel est en liaison à l'une de ses extrémités avec le canal d'alimentation en air comprimé (22, 23) et est fermé à son autre extrémité par une soupape (44), la soupape (44) s'ouvrant lorsque le dispositif de mesure de pression (35) est fixé au dispositif (31, 33, 37, 42, 40) de régulation de l'alimentation en air comprimé.

12. Pistolet pulvérisateur selon l'une quelconque des revendications précédentes, **caractérisé en ce qu'**un canal d'air (36, 43) s'étend dans le dispositif (31, 33, 37, 42, 40) de régulation de l'alimentation en air comprimé, lequel est en liaison à l'une des ses extrémités avec le canal d'alimentation en air comprimé (22, 23) et est fermé à son autre extrémité par une soupape (44), la soupape (44) se fermant automatiquement lorsque le dispositif de mesure de pression (35) est éloigné du dispositif (31, 33, 37, 42, 40) de régulation de l'alimentation en air comprimé.

13. Pistolet pulvérisateur selon la revendication 11 ou 12, **caractérisé en ce que** la soupape (44) est disposée dans l'alésage de passage (43) et est réalisée sous forme de soupape sphérique.

14. Pistolet pulvérisateur selon la revendication 11 ou 12, **caractérisé en ce que** le dispositif de mesure de pression (35) dispose d'une ouverture d'entrée d'air (57) qui est en liaison avec le canal d'air (36, 43) dans le dispositif (31, 33, 37, 42, 40) de régulation de l'alimentation en air comprimé lorsque le dispositif de mesure de pression (35) est fixé au dispositif (31, 33, 37, 42, 40) de régulation de l'alimentation en air comprimé.

15. Pistolet pulvérisateur selon la revendication 14, **caractérisé en ce qu'**un joint d'étanchéité (48) est disposé autour de l'ouverture d'entrée d'air (57), lequel étanchéifie la liaison entre l'ouverture d'entrée d'air (57) et le canal d'air (36, 43) lorsque le dispositif de mesure de pression (35) est fixé au dispositif (31, 33, 37, 42, 40) de régulation de l'alimentation en air comprimé.

16. Pistolet pulvérisateur selon l'une quelconque des revendications précédentes, **caractérisé en ce qu'**un évidement (56) est prévu dans la plaque de fixation (40), lequel est configuré de telle sorte qu'un pointeau de buse (6) disposé dans le corps de pistolet (1) puisse être ressorti du corps de pistolet (1) lorsque le dispositif de mesure de pression (35) est enlevé.

17. Pistolet pulvérisateur selon l'une quelconque des revendications précédentes, **caractérisé en ce que** le dispositif de mesure de pression (35) comprend un boîtier (35a, 35d) au niveau duquel sont prévus des éléments de fixation (49, 54, 55) qui coopèrent avec des éléments de fixation complémentaires (41, 53, 56) au niveau du dispositif (31, 33, 37, 42, 40) de régulation de l'alimentation en air comprimé, lorsque le dispositif de mesure de pression y est fixé.

18. Pistolet pulvérisateur selon la revendication 17, **caractérisé en ce que** les éléments de fixation (49, 54, 55) au niveau du dispositif de mesure de pression (35) comprennent des éléments de serrage, d'enfichage ou d'encliquetage (54) qui sont fixés de manière interchangeable au boîtier (35a, 35d).

19. Pistolet pulvérisateur selon la revendication 17, **caractérisé en ce que** les éléments de fixation (49, 54, 55) sont façonnés d'une seule pièce au boîtier (35a, 35d) du dispositif de mesure de pression (35).

20. Pistolet pulvérisateur selon l'une quelconque des revendications précédentes, **caractérisé en ce que** le dispositif de mesure de pression (35) comprend un boîtier (35a, 35d) dans lequel est disposé un tiroir (100) pouvant être ressorti, lequel reçoit une batterie (35c).

21. Pistolet pulvérisateur selon la revendication 20, **caractérisé en ce que** le tiroir (100) présente un trou borgne (101) pour recevoir la batterie (35c).

22. Pistolet pulvérisateur selon la revendication 20, **caractérisé en ce que** le tiroir (100) est supporté de manière élastique au boîtier (35a, 35d) et est pourvu d'un positionnement.

23. Pistolet pulvérisateur selon l'une quelconque des revendications précédentes, **caractérisé en ce que** le dispositif de mesure de pression (35) comprend un boîtier (35a, 35d) avec une partie inférieure de boîtier (35a) et un couvercle de boîtier (35d), le couvercle de boîtier (35d) étant fixé de manière amovible à la partie inférieure de boîtier (35a).

24. Pistolet pulvérisateur selon la revendication 20, **caractérisé en ce que** dans le boîtier (35a, 35d) est insérée une unité de mesure de pression (35b) pouvant être ressortie, ou **en ce qu'**une unité de mesure de pression est posée sur le boîtier (35a, 35d).
